# EUROPÄISCHE PATENTANMELDUNG

(11) **EP 3 477 115 A1**
(43) Veröffentlichungstag der Anmeldung: **01.05.2019**
(21) Anmeldenummer: 18196420.6
(22) Anmeldetag: 25.09.2018
(51) Int. Cl.: F04D 15/02, F04D 27/00, F04D 27/02, F04D 15/00

(54) **STEUEREINHEIT FÜR EINE FLUIDFÖRDERVORRICHTUNG**

(30) Priorität: 25.10.2017 DE 102017124916
(71) Anmelder: Miele & Cie. KG, 33332 Gütersloh (DE)
(72) Erfinder: Femmer, Uwe, 33330 Gütersloh (DE); Schaefer-van den Boom, Klaus, 53489 Sinzig (DE); Hohlstein, Christoph, 53902 Bad Münstereifel (DE)

(57) **Zusammenfassung**

Die Erfindung betrifft eine Steuereinheit (10) für eine Fluidfördervorrichtung (100), mit einem Regelsystem (12), welches dazu eingerichtet ist, die Fluidfördervorrichtung (100) entsprechend einer vorgegebenen Regelkennlinie zu regeln, wobei die Regelkennlinie des Regelsystems (12) mehrere Bereiche aufweist und sich die der Regelgröße des Regelsystems (12) entsprechenden Parameter der Fluidfördervorrichtung (100), die durch das Regelsystem (12) auf einen bestimmten Wert gebracht und/oder bei einem bestimmten Wert gehalten werden, in zumindest zwei Bereichen der Regelkennlinie voneinander unterscheiden.

## Beschreibung

Die Erfindung betrifft eine Steuereinheit für eine Fluidfördervorrichtung, mit einem Regelsystem, welches dazu eingerichtet ist, die Fluidfördervorrichtung entsprechend einer vorgegebenen Regelkennlinie zu regeln, wobei die Regelkennlinie des Regelsystems mehrere Bereiche aufweist.

Ferner betrifft die Erfindung eine Fluidfördervorrichtung mit einer Steuereinheit und einem elektrischen Antriebsmotor.

Darüber hinaus betrifft die Erfindung ein Verfahren zur Regelung einer Fluidfördervorrichtung, mit dem Schritt: Regeln der Fluidfördervorrichtung entsprechend einer vorgegebenen Regelkennlinie mittels eines Regelsystems, wobei die Regelkennlinie des Regelsystems mehrere Bereiche aufweist.

Bekannte Fluidfördervorrichtungen weisen häufig ein Regelsystem auf, bei welchem ein Parameter der Fluidfördervorrichtung der Regelgröße entspricht und somit durch das Regelsystem auf einen bestimmten Wert gebracht und/oder bei einem bestimmten Wert gehalten wird. Beispielsweise ist der der Regelgröße des Regelsystems entsprechende Parameter der Fluidfördervorrichtung die Drehzahl oder die Leistung eines Antriebsmotors der Fluidfördervorrichtung.

Derartige Regelsysteme, welche lediglich einen Parameter der Fluidfördervorrichtung als Regelgröße verwenden können, sind in ihrem Regelverhalten jedoch erheblich eingeschränkt, sodass mit dem Regelverhalten regelmäßig nicht sämtliche notwendigen Betriebszustände der Fluidfördervorrichtung einstellbar sind. Das Regelverhalten moderner Fluidfördervorrichtungen ist hinsichtlich der Aspekte Umweltfreundlichkeit, Benutzungs- und Bedienkomfort und Funktionsumsetzung zu optimieren. Hinsichtlich der Umweltfreundlichkeit muss das Regelsystem eine energieeffiziente Regelung erlauben, bei welcher die Reduzierung des Energieverbrauchs und die Maximierung des Systemwirkungsgrades im Fokus stehen. Hinsichtlich des Bedien- und Benutzungskomforts soll das Regelsystem zu einer verringerten Geräuscherzeugung der Fluidfördervorrichtung dienen. Außerdem muss das Regelsystem stets die Erfüllung der eigentlichen Vorrichtungsfunktion, also der Förderung eines Fluids, in ausreichendem Maße gewährleisten.

Die bekannten Steuereinheiten für Fluidfördervorrichtungen bieten keine ausreichende Balance zwischen den oben bezeichneten, bei der Regelung zu berücksichtigenden Aspekten.

Die der Erfindung zugrundeliegende Aufgabe besteht somit darin, eine bedarfsgerechtere und dynamischere Regelung von Fluidfördervorrichtungen zu ermöglichen.

Die Aufgabe wird gelöst durch eine Steuereinheit der eingangs genannten Art, wobei sich die der Regelgröße des Regelsystems entsprechenden Parameter der Fluidfördervorrichtung, die durch das Regelsystem auf einen bestimmten Wert gebracht und/oder bei einem bestimmten Wert gehalten werden, in zumindest zwei Bereichen der Regelkennlinie voneinander unterscheiden.

Die Erfindung macht sich die Erkenntnis zunutze, dass durch eine Regelkennlinie mit zumindest zwei Bereichen, in welchen sich die der Regelgröße des Regelsystems entsprechenden Parameter der Fluidfördervorrichtung voneinander unterscheiden, die Regelung der Fluidfördervorrichtung in den zumindest zwei unterschiedlichen Bereichen auf unterschiedliche Aspekte fokussiert werden kann. Beispielsweise kann in einem ersten Bereich der Regelkennlinie das Regelsystem die Fluidfördervorrichtung derart regeln, dass der Betrieb besonders umweltfreundlich bzw. effizient ist.

Beispielsweise arbeitet die Fluidfördervorrichtung in diesem Bereich der Regelkennlinie besonders energieeffizient und weist ihren Best-Efficiency-Point (BEP), also den Betriebspunkt mit dem höchsten Gesamtwirkungsgrad, auf. In einem anderen Bereich der Regelkennlinie kann das Regelsystem die Fluidfördervorrichtung beispielsweise derart regeln, dass der Benutzungs- und/oder Bedienkomfort der Fluidfördervorrichtung im Fokus steht, beispielsweise durch eine Reduzierung der durch die Fluidfördervorrichtung verursachten Geräuschemissionen. In einem anderen Bereich der Regelkennlinie kann die eigentliche Funktion der Fluidfördervorrichtung im Fokus stehen, beispielsweise die WrasenAbsaugung oder Fettabscheidung eines Dunstabzugshaubengebläses, zum Beispiel durch die Maximierung des hydraulischen Durchflusses.

In einer besonders bevorzugten Ausführungsform der erfindungsgemäßen Steuereinheit umfassen die der Regelgröße des Regelsystems entsprechenden Parameter der Fluidfördervorrichtung, die durch das Regelsystem auf einen bestimmten Wert gebracht und/oder bei einem bestimmten Wert gehalten werden, den durch die Fluidfördervorrichtung geförderten Volumenstrom, das Drehmoment eines elektrischen Antriebsmotors der Fluidfördervorrichtung und/oder die Drehzahl eines elektrischen Antriebsmotors der Fluidfördervorrichtung.

Alternativ oder zusätzlich umfassen die der Regelgröße des Regelsystems entsprechenden Parameter der Fluidfördervorrichtung, die durch das Regelsystem auf einen bestimmten Wert gebracht und/oder bei einem bestimmten Wert gehalten werden, die von einem elektrischen Antriebsmotor der Fluidfördervorrichtung aufgenommene elektrische Leistung, den innerhalb eines Fluidförderabschnitts herrschenden Fluiddruck und/oder die von einem elektrischen Antriebsmotor der Fluidfördervorrichtung erzeugte Druckdifferenz.

Beispielsweise kann die Fluidfördervorrichtung ein Dunstabzugshaubengebläse, ein für die Förderung von Heißluft ausgebildeter Backofen-Lüfter, ein für die Förderung von Kühlluft ausgebildeter Backofen-Lüfter, ein für die Förderung von Prozessluft ausgebildetes Wäschetrockner-Gebläse, ein für die Förderung von Kondensator-Kühlluft ausgebildetes Wäschetrockner-Gebläse, ein Staubsaugergebläse, ein Tischventilator, eine Gebäudebe- und -entlüftungseinrichtung, eine Geschirrspülerpumpe und/oder eine Waschmaschinenpumpe, sowohl zum Abpumpen als auch zum Umfluten, sein. Bei den bezeichneten Fluidfördervorrichtungen kann es je nach Betriebszustand und/oder Bedarf vorteilhaft sein, den geförderten Volumenstrom, das Drehmoment und/oder die Drehzahl eines elektrischen Antriebsmotors, die von einem elektrischen Antriebsmotor der Fluidfördervorrichtung aufgenommene elektrische Leistung, den innerhalb eines Fluidförderabschnitts herrschenden Fluiddruck und/oder die von einem elektrischen Antriebsmotor der Fluidfördervorrichtung erzeugte Druckdifferenz als Regelgröße des Regelsystems zu verwenden und bei der Regelung zwischen ein oder mehreren dieser Parameter als Regelgröße umzuschalten, oder anwendungsabhängig eine Mehrgrößenregelung zu verwenden.

In einer anderen bevorzugten Ausführungsform der erfindungsgemäßen Steuereinheit ist das Regelsystem dazu eingerichtet, in einem Bereich der Regelkennlinie den durch die Fluidfördervorrichtung geförderten Volumenstrom konstant zu halten und/oder in einem Bereich der Regelkennlinie das Drehmoment eines elektrischen Antriebsmotors der Fluidfördervorrichtung konstant zu halten. In einer anderen Ausführungsform ist das Regelsystem dazu eingerichtet, in einem Bereich der Regelkennlinie das Drehmoment eines elektrischen Antriebsmotors der Fluidfördervorrichtung im Wesentlichen kontinuierlich oder proportional zu einem Referenzwert zu erhöhen und/oder in einem Bereich der Regelkennlinie das Drehmoment eines elektrischen Antriebsmotors der Fluidfördervorrichtung im Wesentlichen kontinuierlich oder proportional zu einem Referenzwert zu verringern. Der Referenzwert kann beispielsweise die Drehzahl des elektrischen Antriebsmotors der Fluidfördervorrichtung sein.

Wenn die Fluidfördervorrichtung als Dunstabzugshaubengebläse ausgebildet ist, kann durch das Konstanthalten des geförderten Volumenstroms beispielsweise ein Betriebspunkt eingestellt werden, bei welchem der hydraulische Durchfluss zur optimalen WrasenAbsaugung führt.

Wenn die Fluidfördervorrichtung als Backofen-Lüfter für die Förderung von Heißluft ausgebildet ist, kann durch ein Konstanthalten des durch die Fluidfördervorrichtung geförderten Volumenstroms eine Regelung umgesetzt werden, welche nicht davon abhängig ist, ob der Backofen-Lüfter mit einem Fettfilter ausgestattet ist.

Wenn die Fluidfördervorrichtung als Backofen-Lüfter für Kühlluft ausgebildet ist, kann durch das Konstanthalten eines durch die Fluidfördervorrichtung geförderten Volumenstroms eine Regelung umgesetzt werden, welche unabhängig von der Einbausituation des Backofenlüfters in der Küche ist.

Wenn die Fluidfördervorrichtung als Wäschetrockner-Gebläse für Prozessluft ausgebildet ist, kann durch ein Konstanthalten des durch die Fluidfördervorrichtung geförderten Volumenstroms eine Regelung umgesetzt werden, welche unabhängig von der Verflusung des Prozesskreises ist, wobei der Prozesskreis beispielsweise Rohre oder den Wärmetauscher umfasst.

Wenn die Fluidfördervorrichtung als Wäschetrockner-Gebläse für Kondensator-Kühlluft ausgebildet ist, kann durch das Konstanthalten des durch die Fluidfördervorrichtung geförderten Volumenstroms eine Regelung umgesetzt werden, welche unabhängig von der Verflusung sowie der Einbau- und/oder Aufstellsituation des Wäschetrockner-Gebläses bzw. des Wäschetrockners ist.

Wenn die Fluidfördervorrichtung als Staubsaugergebläse ausgebildet ist, kann durch ein Konstanthalten des durch die Fluidfördervorrichtung geförderten Volumenstroms eine Regelung umgesetzt werden, welche unabhängig von Zubehör und Filterzusetzung für eine ideale Staubaufnahme sorgt.

Wenn die Fluidfördervorrichtung als Gebäudebe- und -entlüftungseinrichtung ausgebildet ist, kann durch ein Konstanthalten des durch die Fluidfördervorrichtung geförderten Volumenstroms eine Regelung umgesetzt werden, welche unabhängig von der Verrohrung, also der Länge, der Biegungen und/oder der Querschnittsänderungen, im Gebäude ist.

Wenn die Fluidfördervorrichtung als Geschirrspülerpumpe ausgebildet ist, kann durch das Konstanthalten des durch die Fluidfördervorrichtung geförderten Volumenstroms eine Regelung umgesetzt werden, bei welcher das Schlürfen der Pumpe effektiv vermieden wird.

Wenn die Fluidfördervorrichtung als Waschmaschinenpumpe zum Abpumpen ausgebildet ist, kann beispielsweise durch ein Konstanthalten des durch die Fluidfördervorrichtung geförderten Volumenstroms eine Regelung umgesetzt werden, sodass die Fördermenge der Pumpe unabhängig von der Höhe des Abflusses im Haushalt ist, in welcher der Ablaufschlauch eingehängt ist.

Wenn die Fluidfördervorrichtung als Waschmaschinenpumpe zum Umfluten ausgebildet ist, kann beispielsweise durch ein Konstanthalten des durch die Fluidfördervorrichtung geförderten Volumenstroms eine Regelung umgesetzt werden, sodass der Waschprozess optimiert wird
Wenn die Fluidfördervorrichtung als Dunstabzugshaubengebläse ausgebildet ist, kann durch das Konstanthalten des durch die Fluidfördervorrichtung geförderten Volumenstroms eine Regelung umgesetzt werden, bei welcher der Antriebsmotor
- unabhängig von der Hausinstallation (Anlagenkennlinie) eine konstant gute Wrasenabsaugung ermöglicht,
- bei steigendem Gegendruck der Anlage eine konstant gute Wrasenabsaugung bis zum Erreichen seiner Leistungsgrenze ermöglicht,
- bei fallendem Gegendruck die Leistung, und damit die Drehzahl insofern begrenzt, dass beispielsweise keine mechanische Überbeanspruchung des Antriebssystems erfolgt.

Bei den anderen Varianten der Fluidfördervorrichtung kann mit dem Konstanthalten des Drehmoments des elektrischen Antriebsmotors eine Regelung umgesetzt werden, bei welcher die Gebläse- oder Pumpenleistung maximal ist.

In den Bereichen, in denen die Regelkennlinie das Drehmoment eines elektrischen Antriebsmotors der Fluidfördervorrichtung im Wesentlichen kontinuierlich oder proportional zu einem Referenzwert erhöht oder verringert, wird eine Regelung umgesetzt, bei welcher beispielsweise die Akustik der Fluidfördervorrichtung im Fokus steht. Dabei können akustisch ungünstige Lastzustände entschärft werden, sodass die von der Fluidfördervorrichtung erzeugten Schallemissionen reduziert werden.

Ferner ist eine erfindungsgemäße Steuereinheit bevorzugt, bei welcher das Regelsystem dazu eingerichtet ist, in einem Bereich der Regelkennlinie die Drehzahl eines elektrischen Antriebsmotors der Fluidfördervorrichtung konstant zu halten und/oder in einem Bereich der Regelkennlinie die von einem elektrischen Antriebsmotor der Fluidfördervorrichtung aufgenommene elektrische Leistung konstant zu halten. Alternativ oder zusätzlich ist das Regelsystem dazu eingerichtet, in einem Bereich der Regelkennlinie den innerhalb eines Fluidförderabschnitts herrschenden Fluiddruck konstant zu halten und/oder in einem Bereich der Regelkennlinie die von einem elektrischen Antriebsmotor der Fluidfördervorrichtung erzeugte Druckdifferenz konstant zu halten.

In dem Bereich der Regelkennlinie, in welchem die Drehzahl eines elektrischen Antriebsmotors der Fluidfördervorrichtung konstant gehalten wird, erfolgt die Regelung derart, dass die mechanischen Grenzen der Fluidfördervorrichtung nicht überschritten werden. Dies kann beispielsweise eine einzuhaltende Drehzahlgrenze verwendeter Lager oder gleitender Dichtungen sein. Ferner können hierbei vorrichtungsspezifische oder normative Sicherheitsgrenzen, welche die maximale Umfangsgeschwindigkeit betreffen, berücksichtigt werden.

In dem Bereich der Regelkennlinie, in welchem die von einem elektrischen Antriebsmotor der Fluidfördervorrichtung aufgenommene elektrische Leistung konstant gehalten wird, kann die Regelung derart erfolgen, dass der Best-Efficiency-Point erreicht wird, sodass die Fluidfördervorrichtung und der elektrische Antriebsmotor ihren maximalen Wirkungsgrad aufweisen. Die Bereiche der Regelkennlinie, in welchen der innerhalb des Fluidförderabschnitts herrschende Druck konstant gehalten wird und/oder der von einem elektrischen Antriebsmotor der Fluidfördervorrichtung erzeugte Differenzdruck konstant gehalten wird, kann zur Filtersensierung genutzt werden.

Bei Wäschetrocknern kann beispielsweise der Grad der Verflusung, der Beladungszustand und/oder der Filterzustand in diesen Bereichen der Regelkennlinie erfasst werden. Wenn die Fluidfördervorrichtung als Staubsaugergebläse ausgebildet ist, kann hierdurch außerdem eine Regelung umgesetzt werden, welche unabhängig vom Untergrund eine konstante Schiebekraft der Bodendüse einstellt. Wenn die Fluidfördervorrichtung als Geschirrspülerpumpe ausgebildet ist, kann in diesen Bereichen eine Regelung umgesetzt werden, bei welcher das Spülgut, der Einschub und/oder die Korbgestaltung sensiert werden kann.

In einer anderen vorteilhaften Ausführungsform der erfindungsgemäßen Steuereinheit ist das Regelsystem dazu eingerichtet, abhängig von einem oder mehreren Umschaltparametern in einen anderen Bereich der Regelkennlinie umzuschalten und das Regelverhalten entsprechend anzupassen. Die Umschaltung erfolgt vorzugsweise bei Über- oder Unterschreitung von einem oder mehreren Grenzwerten der Umschaltparameter.

In einer weiteren Ausführungsform der erfindungsgemäßen Steuereinheit umfasst der eine oder umfassen die mehreren Umschaltparameter den durch die Fluidfördervorrichtung geförderten Volumenstrom, das Drehmoment eines elektrischen Antriebsmotors der Fluidfördervorrichtung und/oder die Drehzahl eines elektrischen Antriebsmotors der Fluidfördervorrichtung. Alternativ oder zusätzlich umfasst der eine oder umfassen die mehreren Umschaltparameter die von einem elektrischen Antriebsmotor der Fluidfördervorrichtung aufgenommene elektrische Leistung, den innerhalb eines Fluidförderabschnitts herrschenden Fluiddruck und/oder die von einem elektrischen Antriebsmotor der Fluidfördervorrichtung erzeugte Druckdifferenz. Insbesondere, wenn ein oder mehrere Grenzwerte dieser Umschaltparameter über- oder unterschritten werden, kann eine Umschaltung in einen anderen Bereich der Regelkennlinie ausgeführt werden.

Außerdem ist eine erfindungsgemäße Steuereinheit bevorzugt, bei welcher das Regelsystem dazu eingerichtet ist, in einen anderen Bereich der Regelkennlinie umzuschalten, wenn die von einem elektrischen Antriebsmotor der Fluidfördervorrichtung aufgenommene elektrische Leistung einen oberen Grenzwert oder einen unteren Grenzwert erreicht, wenn die Drehzahl eines elektrischen Antriebsmotors der Fluidfördervorrichtung einen oberen Grenzwert oder einen unteren Grenzwert erreicht, und/oder wenn das Drehmoment eines elektrischen Antriebsmotors der Fluidfördervorrichtung einen unteren Grenzwert oder einen oberen Grenzwert erreicht.

Wenn die Fluidfördervorrichtung als Dunstabzugshaubengebläse ausgebildet ist, erfolgt die Umschaltung von einem Bereich der Regelkennlinie, in welchem der durch die Fluidfördervorrichtung geförderte Volumenstrom konstant gehalten wird, in einen Bereich der Regelkennlinie, in welchem das Drehmoment eines elektrischen Antriebsmotors der Fluidfördervorrichtung konstant gehalten wird, wenn die von dem elektrischen Antriebsmotor der Fluidfördervorrichtung aufgenommene elektrische Leistung einen oberen Grenzwert erreicht. Eine Umschaltung von dem Bereich der Regelkennlinie, in welchem das Drehmoment des elektrischen Antriebsmotors der Fluidfördervorrichtung konstant gehalten wird, in den Bereich der Regelkennlinie, in welchem der durch die Fluidfördervorrichtung geförderte Volumenstrom konstant gehalten wird, erfolgt vorzugsweise dann, wenn die von dem elektrischen Antriebsmotor der Fluidfördervorrichtung aufgenommene elektrische Leistung einen unteren Grenzwert erreicht.

Eine Umschaltung von dem Bereich der Regelkennlinie, in welchem das Drehmoment des elektrischen Antriebsmotors der Fluidfördervorrichtung konstant gehalten wird, in einen Bereich der Regelkennlinie, in welchem das Drehmoment des elektrischen Antriebsmotors der Fluidfördervorrichtung proportional zu einem Referenzwert erhöht oder verringert wird, erfolgt vorzugsweise dann, wenn die von dem elektrischen Antriebsmotor der Fluidfördervorrichtung aufgenommene elektrische Leistung einen weiteren oberen Grenzwert erreicht. Die Umschaltung von dem Bereich der Regelkennlinie, in welchem das Drehmoment des elektrischen Antriebsmotors der Fluidfördervorrichtung proportional zu einem Referenzwert erhöht oder verringert wird, in den Bereich der Regelkennlinie, in welchem das Drehmoment des elektrischen Antriebsmotors der Fluidfördervorrichtung konstant gehalten wird, erfolgt vorzugsweise dann, wenn die von dem elektrischen Antriebsmotor der Fluidfördervorrichtung aufgenommene elektrische Leistung einen weiteren unteren Grenzwert erreicht.

Die Umschaltung von dem Bereich der Regelkennlinie, in welchem das Drehmoment des elektrischen Antriebsmotors der Fluidfördervorrichtung proportional zu einem Referenzwert erhöht oder verringert wird, in einen Bereich der Regelkennlinie, in welchem die von dem elektrischen Antriebsmotor aufgenommene elektrische Leistung konstant gehalten wird, erfolgt vorzugsweise dann, wenn die Drehzahl des elektrischen Antriebsmotors einen oberen Grenzwert erreicht. Die Umschaltung von dem Bereich der Regelkennlinie, in welchem die von dem elektrischen Antriebsmotor aufgenommene elektrische Leistung konstant gehalten wird, in den Bereich der Regelkennlinie, in welchem das Drehmoment des elektrischen Antriebsmotors der Fluidfördervorrichtung proportional zu einem Referenzwert erhöht oder verringert wird, erfolgt vorzugsweise dann, wenn die Drehzahl des elektrischen Antriebsmotors einen unteren Grenzwert erreicht. Die Regelung auf konstante elektrische Leistung kann grundsätzlich vorteilhaft bei der Gestaltung und Abarbeitung von ECO- oder Labelprogrammen sein, da die vom elektrischen Antriebsmotor oder der Fluidfördervorrichtung aufgenommene elektrische Leistung über den Betriebszeitraum vorhersehbar und/oder kalkulierbar ist.

Die Umschaltung von dem Bereich der Regelkennlinie, in welchem die von dem elektrischen Antriebsmotor aufgenommene elektrische Leistung konstant gehalten wird, in den Bereich der Regelkennlinie, in welchem der innerhalb eines Fluidförderabschnitts herrschende Fluiddruck konstant gehalten wird oder die von dem elektrischen Antriebsmotor erzeugte Druckdifferenz konstant gehalten wird, erfolgt vorzugsweise dann, wenn die Drehzahl des elektrischen Antriebsmotors einen oberen Grenzwert erreicht und das Drehmoment des elektrischen Antriebsmotors gleichzeitig einen unteren Grenzwert erreicht. Die Umschaltung von dem Bereich der Regelkennlinie, in welchem der innerhalb des Fluidförderabschnitts herrschende Fluiddruck konstant gehalten wird oder die von dem elektrischen Antriebsmotor erzeugte Druckdifferenz konstant gehalten wird, in den Bereich der Regelkennlinie, in welchem die von dem elektrischen Antriebsmotor aufgenommene elektrische Leistung konstant gehalten wird, erfolgt vorzugsweise dann, wenn das Drehmoment des elektrischen Antriebsmotors einen oberen Grenzwert erreicht.

Die Umschaltung von dem Bereich der Regelkennlinie, in welchem der innerhalb des Fluidförderabschnitts herrschende Fluiddruck konstant gehalten wird oder die von dem elektrischen Antriebsmotor erzeugte Druckdifferenz konstant gehalten wird, in den Bereich der Regelkennlinie, in welchem die Drehzahl des elektrischen Antriebsmotors konstant gehalten wird, erfolgt vorzugsweise dann, wenn das Drehmoment des elektrischen Antriebsmotors einen unteren Grenzwert erreicht. Die Umschaltung von dem Bereich der Regelkennlinie, in welchem die Drehzahl des elektrischen Antriebsmotors konstant gehalten wird, in den Bereich der Regelkennlinie, in welchem der innerhalb des Fluidförderabschnitts herrschende Fluiddruck konstant gehalten wird oder die von dem elektrischen Antriebsmotor erzeugte Druckdifferenz konstant gehalten wird, erfolgt vorzugsweise dann, wenn das Drehmoment des elektrischen Antriebsmotors einen oberen Grenzwert erreicht.

Eine mögliche Regelung der Kondensator-Temperatur einer Wärmepumpe in einem Wäschetrockner über die Leistung, die Drehzahl oder den hydraulischen Durchfluss des zugehörigen Kühlluft-Gebläses ist ebenfalls eine denkbare vorteilhafte Anwendung. Eine Geschirrspülerpumpe oder eine Pumpe eines Desinfektors in einem Krankenhaus könnte zudem eine Sensierung des Spülgutes oder des genutzten Korbes oder Einschubes ausführen, um zusätzliche Information für den Spülprozess oder die Dokumentation des Spülergebnisses herbeizuführen. Bei einem Tischventilator lassen sich durch die Kombination der Regelverfahren Wirkungsgrad, Akustik, unterschiedliche Leistungsstufen und Sicherheitsgrenzwerte bei der Umfangsgeschwindigkeit miteinander sinnvoll kombinieren.

In einer alternativen Ausführungsform der erfindungsgemäßen Steuereinheit umfasst das Regelsystem einen Regler, welcher mit einer oder mehreren Auswahleinheiten signalleitend verbunden ist, wobei die eine oder die mehreren Auswahleinheiten jeweils dazu eingerichtet sind, ein anzuwendendes Regelverfahren des Reglers, die Regelgröße und/oder die Stellgröße auszuwählen. Das Regelverhalten des Reglers ist vorzugsweise abhängig von der ausgewählten Regelgröße und/oder der ausgewählten Stellgröße.

In einer anderen bevorzugten Ausführungsform der erfindungsgemäßen Steuereinheit weist diese eine Auswerteeinrichtung auf, welche dazu eingerichtet ist, auf Grundlage von Auswertesignalen Betriebsparameter der Fluidfördervorrichtung abzuleiten. Die Auswertesignale können beispielsweise von der Drehzahl oder dem Drehmoment eines elektrischen Antriebsmotors der Fluidfördervorrichtung abhängig sein. Die Betriebsparameter können Parameter sein, welche schwer, aufwändig und/oder teuer zu messende Größen sind, wie beispielsweise ein durch die Fluidfördervorrichtung geförderter Volumenstrom und/oder eine von einem elektrischen Antriebsmotor der Fluidfördervorrichtung erzeugte Druckdifferenz. Durch die Auswerteeinrichtung können Betriebsparameter der Fluidfördervorrichtung ermittelt werden, ohne dass teure Messtechnik in der Fluidfördervorrichtung verbaut sein muss. Somit werden die Herstellungskosten der Fluidfördervorrichtung durch die Auswerteeinrichtung erheblich reduziert.

Die der Erfindung zugrundeliegende Aufgabe wird ferner durch eine Fluidfördervorrichtung der eingangs genannten Art gelöst, wobei die Steuereinheit der Fluidfördervorrichtung nach einer der vorstehend beschriebenen Ausführungsformen ausgebildet ist. Hinsichtlich der Vorteile und Modifikationen der erfindungsgemäßen Fluidfördervorrichtung wird zunächst auf die Vorteile und Modifikationen der erfindungsgemäßen Steuereinheit verwiesen.

In einer besonders bevorzugten Ausführungsform der erfindungsgemäßen Fluidfördervorrichtung ist der elektrische Antriebsmotor ein elektronisch kommutierter Motor, ein permanentmagneterregter Synchronmotor oder jedweder geregelte Antrieb, wie zum Beispiel ein geregelter Kommutatormotor (geregelte Gleichstrommaschine oder geregelter Universalmotor). Dadurch, dass der elektrische Antriebsmotor ein elektronisch kommutierter Motor, ein permanentmagneterregter Synchronmotor oder ein anderer geregelter Antrieb ist, kann die Fluidfördervorrichtung ohne Weiteres in einer Vielzahl von Haushaltsgeräten eingesetzt werden, bei denen die bezeichneten Motorentypen oder andere geregelte Antriebe Verwendung finden.

Außerdem ist eine erfindungsgemäße Fluidfördervorrichtung bevorzugt, bei welcher die Fluidfördervorrichtung als Bestandteil eines Haushaltsgeräts ausgebildet ist.

In einer Weiterbildung der erfindungsgemäßen Fluidfördervorrichtung ist die Fluidfördervorrichtung als Backofenlüfter, Trocknergebläse, Staubsaugergebläse, Tischventilator, Gebäudebe- und -entlüftungseinheit, Dunstabzugshaubengebläse, Geschirrspülerpumpe oder Waschmaschinenpumpe ausgebildet. Der Backofenlüfter kann beispielsweise dazu eingerichtet sein, Heißluft zu fördern oder Kühlluft für das Gehäuse zu fördern. Das Trocknergebläse kann beispielsweise dazu eingerichtet sein, Prozessluft zu fördern oder Kühlluft für einen oder mehrere Kondensatoren zu fördern.

Die der Erfindung zugrundeliegende Aufgabe wird ferner durch ein Verfahren zur Regelung einer Fluidfördervorrichtung gelöst, wobei die Fluidfördervorrichtung entsprechend einer vorgegebenen Regelkennlinie mittels eines Regelsystems geregelt wird und die Regelkennlinie des Regelsystems mehrere Bereiche aufweist. Erfindungsgemäß unterscheiden sich die der Regelgröße des Regelsystems entsprechenden Parameter der Fluidfördervorrichtung, die durch das Regeln der Fluidfördervorrichtung auf einen bestimmten Wert gebracht und/oder bei einem bestimmten Wert gehalten werden, in zumindest zwei Bereichen der Regelkennlinie voneinander.

In einer bevorzugten Ausführungsform des erfindungsgemäßen Verfahrens wird dieses mit einer Steuereinheit gemäß einer der vorstehend beschriebenen Ausführungsformen ausgeführt oder umfasst einen oder mehrere durch eine zuvor beschriebene Steuereinheit ausführbare Schritte.

Weitere Merkmale und Details der Erfindung sind der nachfolgenden Figurenbeschreibung und den Ansprüchen zu entnehmen. Es zeigen
- Fig. 1: ein Ausführungsbeispiel der erfindungsgemäßen Fluidfördervorrichtung in einer schematischen Darstellung;
- Fig. 2: den Verlauf einer Regelkennlinie eines Regelsystems einer erfindungsgemäßen Steuereinheit;
- Fig. 3: einen Drehmomenten-Drehzahl-Verlauf zu der in der Fig. 2 dargestellten Regelkennlinie; und
- Fig. 4: den Verlauf einer Regelkennlinie eines weiteren Regelsystems einer erfindungsgemäßen Steuereinheit.

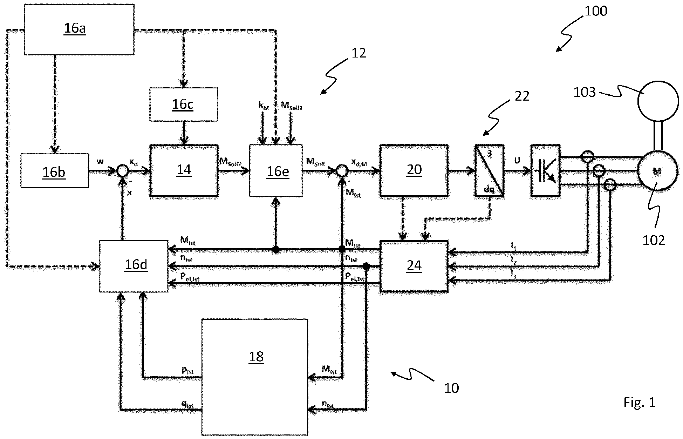

Die Fig. 1 zeigt eine Fluidfördervorrichtung 100, welche als Bestandteil eines Haushaltsgeräts ausgebildet ist. Beispielsweise kann die Fluidfördervorrichtung 100 als Backofenlüfter, Trocknergebläse, Staubsaugergebläse, Tischventilator, Gebäude-Be- und Entlüftungseinheit, Dunstabzugshaubengebläse, Geschirrspülerpumpe oder Waschmaschinenpumpe ausgebildet sein.

Die Fluidfördervorrichtung 100 umfasst eine Steuereinheit 10, einen Momenten-Regler 20, einen Transformator 22, eine Berechnungseinheit 24, einen elektrischen Antriebsmotor 102 und die hydraulische Arbeitsmaschine 103.

Der elektrische Antriebsmotor 102 ist ein permanentmagneterregter Synchronmotor, ein elektronisch kommutierter Motor (EC-Motor) oder jedweder geregelte Antrieb, wie zum Beispiel ein geregelter Kommutatormotor (geregelte Gleichstrommaschine oder geregelter Universalmotor).

Die Steuereinheit 10 umfasst ein Regelsystem 12 und eine Auswerteeinrichtung 18.

Das Regelsystem 12 regelt die Fluidfördervorrichtung 100 entsprechend einer vorgegebenen Regelkennlinie, wobei die Regelkennlinie des Regelsystems 12 mehrere Bereiche aufweist und die der Regelgröße des Regelsystems 12 entsprechenden Parameter der Fluidfördervorrichtung 100, die durch das Regelsystem 12 auf einen bestimmten Wert gebracht und/oder bei einem bestimmten Wert gehalten werden, sich in zumindest zwei Bereichen der Regelkennlinie voneinander unterscheiden. Außerdem kann mittels des Regelsystems 12 abhängig von einem oder mehreren Umschaltparametern in einen anderen Bereich der Regelkennlinie umgeschaltet und das Regelverhalten entsprechend angepasst werden.

Hierzu weist das Regelsystem 12 einen Regler 14 auf, welcher mit fünf Auswahleinheiten 16a-16e signalleitend verbunden ist. Der Regler 14 kann beispielsweise als P-, I-, PI- oder anderer Regler (beispielsweise Zustandsregler) ausgeführt sein. Die Auswahleinheit 16a wählt ein anzuwendendes Regelverhalten des Reglers 14 aus. Die Auswahleinheit 16b wählt die Stellgröße des Reglers 14 aus. Die Auswahleinheit 16c schaltet den Regler 14 zwischen unterschiedlichen Bereichen der Regelkennlinie um. Dadurch, dass sich die der Regelgröße des Regelsystems 12 entsprechenden Parameter der Fluidfördervorrichtung 100, die durch das Regelsystem 12 auf einen bestimmten Wert gebracht und/oder bei einem bestimmten Wert gehalten werden, in den einzelnen Bereichen der Regelkennlinie voneinander unterscheiden, kann eine Umschaltung in einen anderen Bereich der Regelkennlinie auch mit einem Wechsel des der Regelgröße des Regelsystems 12 entsprechenden Parameters einhergehen. Die Auswahleinheit 16d wählt die Regelgröße des Reglers 14 aus.

Vorliegend kann die Regelgröße des Regelsystems 12 der durch die Fluidfördervorrichtung 100 geförderte Volumenstrom, das Drehmoment des elektrischen Antriebsmotors 102 der Fluidfördervorrichtung 100, die Drehzahl des elektrischen Antriebsmotors 102 der Fluidfördervorrichtung 100, die von dem elektrischen Antriebsmotor 102 der Fluidfördervorrichtung 100 aufgenommene elektrische Leistung und die von dem elektrischen Antriebsmotor 102 der Fluidfördervorrichtung 100 erzeugte Druckdifferenz sein.

Aus der Differenz der Stellgröße w und der Regelgröße x wird die Regelabweichung x_{d} berechnet und dem Regler 14 zugeführt. Der Regler 14 erzeugt die Stellgröße M_{Soll2}. Diese wird der Auswahleinheit 16e als Eingangsgröße zugeführt. Die Auswahleinheit 16e hat grundsätzlich die Aufgabe, abhängig vom gewählten Regelverfahren, einen Momentensollwert M_{Soll} bereitzustellen. Hierzu wird entweder die Ausgangsgröße des Reglers 14 M_{Soll2}, ein gewünschtes Soll-Drehmoment M_{Soll1} oder das Produkt aus dem Ist-Drehmoment M_{Ist} und einem Proportionalitätsfaktor k_{M} als Momentensollwert M_{Soll} berechnet.

Das von dem Regler 14 angewandte Regelverhalten wird in Abhängigkeit von äußeren Einflüssen selbständig von dem Regelsystem 12 ausgewählt. Die Stellgröße und die Regelgröße können während der Regelung wechseln.

Für den unterlagerten Momenten-Regler 20 wird vom Momentensollwert M_{Soll} der Momenten-Istwert M_{Ist} abgezogen und diesem dann als Eingangsgröße zugeführt. Der Momenten-Regler 20 ist dabei Teil einer feldorientierten Regelung. Der Momenten-Regler 20 wird in der Regel als PI-Regler ausgeführt, kann aber auch ein anderer Regler-Typ sein.

In diesem Beispiel ist die Regelung als Kaskadenregelung ausgeführt. Diese beinhaltet den inneren Regelkreis, den Momenten-Regler 20, welcher als Eingangsgröße immer die Regelabweichung des elektrischen Momentes X_{d,M} erhält. Dieser kann aber auch, anders als in diesem Beispiel, als Querstromregler ausgeführt sein.

Der äußere Regelkreis wird hier über den umschaltbaren Regler 14 geschlossen, beziehungsweise über die Auswahleinheit 16e als Steuerung vorgegeben. Die Regelstrecke besteht aus Transformationen 22, Leistungsstellern, dem elektrischen Antriebsmotor 102 und der hydraulischen Arbeitsmaschine 103.

Die Berechnungseinheit 24 ist dazu eingerichtet, die Messung oder Berechnung des Drehmoments des elektrischen Antriebsmotors 102, der Drehzahl des elektrischen Antriebsmotors 102 und der von dem elektrischen Antriebsmotor 102 aufgenommenen elektrischen Leistung auszuführen. Hierzu werden Messgrößen, wie beispielsweise der elektrische Phasenstrom oder die Phasenspannungen und gegebenenfalls im Umrichter hinterlegte Kenngrößen des elektrischen Antriebsmotors 102 herangezogen.

Die Auswerteeinrichtung 18 leitet auf Grundlage von Auswertesignalen Betriebsparameter der Fluidfördervorrichtung 100 ab. Die Eingangsgrößen der Auswerteeinrichtung sind elektrische oder physikalische Messgrößen oder daraus berechnete oder durch andere Algorithmen gefilterte oder geschätzte Größen, wie beispielsweise das elektrische Ist-Moment des elektrischen Antriebsmotors 102 M_{Ist} oder die Ist-Drehzahl des elektrischen Antriebsmotors 102 n_{Ist}. Die Auswerteeinrichtung 18 rechnet auf Grundlage von mathematischen Gleichungen, wie beispielsweise Polynomen, aber auch anderen mathematischen Zusammenhängen, und/oder auf Grundlage von Tabellen die messbaren oder ohnehin zur Verfügung stehenden physikalischen Größen in aufwendig oder ausschließlich kostenintensiv messbare physikalische Größen, wie beispielsweise den durch die Fluidfördervorrichtung 100 geförderten Volumenstrom oder die von dem elektrischen Antriebsmotor 102 und der hydraulischen Arbeitsmaschine 103 erzeugte Druckdifferenz, um.

Die Vorteile der Berechnung dieser Größen auf Grundlage von Polynomen gegenüber der Erfassung auf Grundlage tabellarischer Zusammenhänge können insbesondere in der Genauigkeit der ermittelten Werte liegen. Bei der Tabelle liegt nur eine begrenzte Anzahl von Messpunkten vor, was zu Ungenauigkeiten bei der Bestimmung der aufwendig messbaren physikalischen Größen führen kann. Auch eine programmiertechnisch implementierte Interpolation linearisiert zwischen den bekannten Stützstellen der Tabelle lediglich. Das Polynom stellt in der Regel eine stetige, mathematische Funktion dar, welche zu jeder Kombination der Eingangsgrößen die richtige Ausgangsgröße liefern kann.

Die mathematischen Zusammenhänge werden in der Regel bei der Entwicklung der Fluidfördervorrichtung bestimmt, beispielsweise bei Prüfstandsmessungen, und sind als fester Bestandteil der Regelung in der Software kodiert. Faktoren oder Werte der mathematischen Zusammenhänge können aber auch ausschließlich oder zusätzlich bei einer Bandendprüfung der Fluidfördervorrichtung oder einer Bandendprüfung des Haushaltsgeräts, in welchem die Fluidfördervorrichtung integriert ist, ermittelt und/oder angepasst werden. Dies minimiert mögliche Toleranzen des Haushaltsgeräts, die bei der Druck- oder Durchflussbestimmung das Ergebnis beeinflussen können, weiter, da sich Serienfertigungsstreuungen bei der Fertigung ungünstig auf die Genauigkeit auswirken können.

Auch durch die Anzahl der für die Bestimmung der mathematischen Zusammenhänge herangezogenen Messwerte kann die Genauigkeit beeinflusst werden. Eine hohe Anzahl von Messwerten ist hierbei vorteilhaft. In der Regel werden unterschiedliche mathematische Verfahren zur Bestimmung der unterschiedlichen aufwendig oder ausschließlich kostenintensiv messbaren, physikalischen Größen, wie beispielsweise den durch die Fluidfördervorrichtung 100 geförderten Volumenstrom oder die von dem elektrischen Antriebsmotor 102 und der hydraulischen Arbeitsmaschine 103 erzeugte Druckdifferenz, verwendet. Die durch die Auswerteeinrichtung 18 errechneten Istwerte können dann der Auswahleinheit 16d zugeführt werden, um den Regelkreis schlussendlich zu schließen.

Für die Filtersensierung kann es, über die Bandendprüfung der Fluidfördervorrichtung oder einer Bandendprüfung des Haushaltsgeräts hinaus, nötig sein, bei der Inbetriebnahme des Haushaltsgeräts im praktischen Einsatzumfeld eine Referenzmessung auszuführen, welche Kennwerte für den durch die Fluidfördervorrichtung 100 geförderten Volumenstrom, das Drehmoment des elektrischen Antriebsmotors 102 der Fluidfördervorrichtung 100, die Drehzahl des elektrischen Antriebsmotors 102 der Fluidfördervorrichtung 100, die von dem elektrischen Antriebsmotor 102 der Fluidfördervorrichtung 100 aufgenommene elektrische Leistung, den innerhalb eines Fluidförderabschnitts herrschenden Fluiddruck und/oder die von dem elektrischen Antriebsmotor 102 und der hydraulischen Arbeitsmaschine 103 der Fluidfördervorrichtung 100 erzeugte Druckdifferenz und/oder Kombinationen daraus ermittelt, welche dann in einem nicht flüchtigen Speicherbereich abgelegt werden und auf welche während des Betriebes des Haushaltsgeräts zurückgegriffen werden kann. Eine Referenzmessung kann in unterschiedlichen Konfigurationen des Haushaltsgeräts erfolgen, beispielsweise mit Filter und ohne Filter oder mit unterschiedlichen Filtertypen.

Später kann im normalen Betrieb des Haushaltsgeräts im praktischen Einsatz dann eine Abweichung der direkt und indirekt messbaren physikalischen Größen und/oder Kombinationen daraus im Vergleich zu den zuvor im nicht flüchtigen Speicherbereich abgelegten Kennwerten bewertet und auf eine Veränderung des Zustands des Haushaltsgeräts geschlossen werden, beispielsweise eine Verringerung der wirksamen hydraulischen Querschnittfläche durch eine Filterzusetzung. Dieser Zustand kann dem Benutzer mitgeteilt werden.

Somit ist kein weiterer Sensor, außer denen für den Betrieb und die Funktion der feldorientierten Regelung auf dem elektronischen Frequenzumrichter ohnehin notwendigen Sensoren, wie beispielsweise Stromsensoren für die Motorphasenströme, notwendig. Für die Funktion der feldorientierten Regelung sind die Eingangsgrößen, die Motorspannung und der Motorstrom notwendig. Die Spannungen werden entweder direkt aus der Stellgröße des Wechselrichters bestimmt oder gemessen. Die Ströme werden alle oder teilweise gemessen, beispielsweise mit Hilfe von Shunts oder Stromwandlern, und über mathematische Gleichungen in Rotorkoordinaten transformiert. Die für die korrekte Funktion der feldorientierten Regelung notwendige Information über die Rotorlage, beispielsweise beim permanentmagneterregter Synchronmotor, kann unter anderem über einen indirekten Schätz-Algorithmus, beispielsweise über ein EMK-basiertes Modell, gebildet werden.

In dem geschlossenen Regelkreis der feldorientierten Regelung kann das elektrische Moment des elektrischen Antriebsmotors 102 aus dem Produkt der Drehmoment-bildenden Stromkomponente und der Flussverkettung des elektrischen Antriebsmotors errechnet werden. Die Drehzahl entspricht der Felddrehzahl geteilt durch die Polpaarzahl des Motors und wird vom Umrichter vorgegeben und ist somit bekannt. Weitere notwendige, zeitveränderliche Größen werden diesen oder anderen internen Größen der feldorientierten Regelung entnommen und, falls notwendig, noch entsprechend umgerechnet.

Bei einem bürstenlosen Gleichstrommotor könnte als Last-proportionaler Kennwert auch ein Verhältnis aus Umrichterausgangsspannung und Drehzahl des elektrischen Antriebsmotors 102 gebildet werden, wobei die Drehzahl des elektrischen Antriebsmotors 102 beispielsweise durch das sensorlose Verfahren zur Erkennung des Nulldurchganges der induzierten Phasenspannung (EMK) während des stromlosen Zeitraums der Ansteuerung ermittelt werden kann.

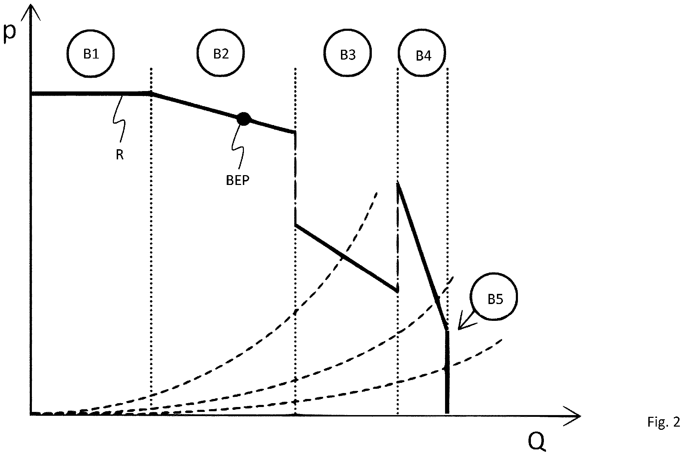

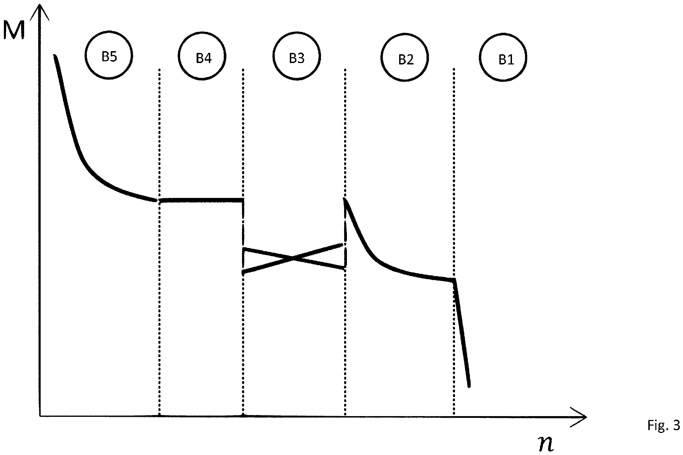

Die Fig. 2 zeigt eine Regelkennlinie R eines Regelsystems 12 einer Steuereinheit 10. Im dargestellten Druck-Volumenstrom-Diagramm (p-Q-Diagramm, oder auch p-*V̇*-Diagramm) weist die Regelkennlinie R mehrere Bereiche B1-B5 auf. Das damit in Zusammenhang stehende Verhalten des elektrischen Antriebsmotors 102 ist dem Drehmoment-Drehzahl-Diagramm der Fig. 3 zu entnehmen.

In dem Bereich B5 wird eine Regelung auf einen konstanten Volumenstrom realisiert. Hier liegt das Hauptaugenmerk im zu erreichenden hydraulischen Durchfluss, welchen es, unabhängig von der Anlagenkennlinie, innerhalb bestimmter Systemgrenzen konstant zu halten gilt. Dies wird durch einen Parabel-förmigen Verlauf des Drehmomentes über der Drehzahl erreicht. Aufgrund der begrenzten elektrischen und/oder hydraulischen Leistung ist mit zunehmendem Druck der gewünschte Soll-Volumenstrom nicht beliebig zu halten, da mit zunehmendem Druck die hydraulische Leistung, und somit, über den Wirkungsgrad des Motors, auch die elektrische Leistung ansteigt. Die Regelung schaltet daher zu einem bestimmten Zeit- oder Lastpunkt in den Bereich B4.

In dem Bereich B4 wird das Drehmoment des elektrischen Antriebsmotors 102 konstant gehalten, sodass in diesem Bereich auf einen Momentensollwert geregelt wird. Es ergibt sich dann eine Regelkennlinie R wie in Bereich B4 der Fig. 2 dargestellt. Nähert sich, beispielsweise aufgrund von Verschmutzungen oder eines Defektes in einer Verrohrung, der Lastpunkt beispielsweise in Richtung eines akustischen Problempunktes, kann wiederum das Regelverfahren daraufhin umgeschaltet werden, sodass die Leistung reduziert, und damit einhergehend das akustische Verhalten optimiert werden. Dies geschieht in dem Bereich B3.

In dem Bereich B3 wird das Drehmoment des elektrischen Antriebsmotors 102 proportional zu einem Referenzwert, nämlich der Drehzahl des elektrischen Antriebsmotors 102, erhöht oder verringert, sodass der Drehmomenten-Sollwert in Anhängigkeit von der Drehzahl vorgegeben wird. Hierbei wird zwischen positiven Koeffizienten, bei welchen das Moment mit der Drehzahl steigt, und negativen Koeffizienten, bei welchen das Moment mit der Drehzahl sinkt, unterschieden. Dies hat Einfluss auf die Regelkennlinie R. Der akustisch kritische Bereich wird mit verringerter Leistung durchlaufen und somit ein akustisch kritisches Verhalten des Haushaltsgeräts entschärft. Die weitere Verringerung des hydraulischen Volumenstroms hat zur Folge, dass in den Bereich B2 geschaltet wird.

In dem Bereich B2 der Regelkennlinie R kann der Best-Efficiency-Point BEP eingestellt werden, da in diesem Punkt idealerweise die Fluidfördervorrichtung 100, der elektrische Antriebsmotor 102 und die hydraulische Arbeitsmaschine 103 jeweils ihren maximalen Wirkungsgradpunkt haben. Der Frequenzumrichter geht mit Hilfe seiner implementierten Regelverfahren genau auf diesen Punkt ein, und stellt sicher, dass durch eine korrekte Leistungssollwert-Vorgabe der Differenzdruck und Volumenstrom im Best-Efficiency-Point BEP zusammenpassen.

In dem Bereich B1 wird bei weiter abnehmendem Durchfluss die von dem elektrischen Antriebsmotor 102 der Fluidfördervorrichtung 100 erzeugte Druckdifferenz konstant gehalten, um beispielsweise den mechanischen Randbedingungen des Antriebssystems gerecht zu werden. Im Fehlerfall, beispielsweise bei einem verstopften Absaugsystem oder bei einem zugesetzten Filter, kann der Bereich B1 erreichen werden, was von der Regelung ausgewertet wird und eine entsprechende Reaktion zur Folge haben kann.

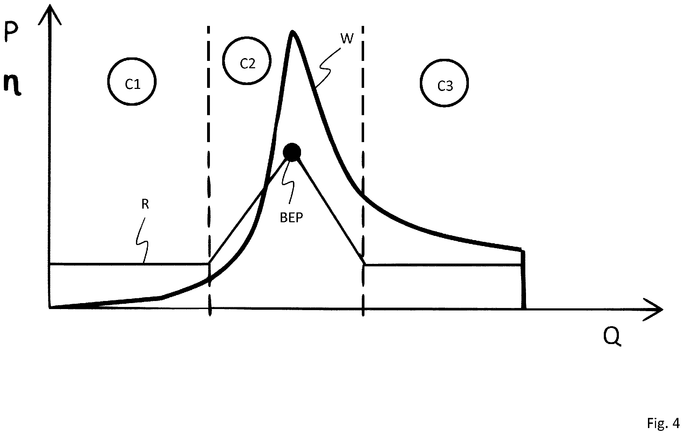

Die Fig. 4 zeigt ein weiteres Beispiel einer Regelkennlinie R mit Bereichen C1-C3. In den Bereichen C1 und C3 der Regelkennlinie R wird auf einen konstanten Differenzdruck geregelt. In dem Bereich C2 wird derart geregelt, dass der Druck in dem Maße steigt, dass der Best-Efficiency-Point BEP angefahren wird. Die Wirkungsgradkennlinie W zeigt die Veränderung des Gesamtwirkungsgrads der Fluidfördervorrichtung 100, welche mit der Anpassung des Drucks einhergeht.

### Bezugszeichenliste

- 10: Steuereinheit
- 12: Regelsystem
- 14: Regler
- 16a-16e: Auswahleinheiten
- 18: Auswerteeinrichtung
- 20: Regler
- 22: Transformator
- 24: Berechnungseinheit

- 100: Fluidfördervorrichtung
- 102: elektrischer Antriebsmotor
- 103: hydraulische Arbeitsmaschine

- R: Regelkennlinie
- B1-B5: Bereiche der Regelkennlinie
- C1-C3: Bereiche der Regelkennlinie
- BEP: Best-Efficiency-Point
- W: Wirkungsgradkennlinie

## Patentansprüche

1. Steuereinheit (10) für eine Fluidfördervorrichtung (100), mit
- einem Regelsystem (12), welches dazu eingerichtet ist, die Fluidfördervorrichtung (100) entsprechend einer vorgegebenen Regelkennlinie zu regeln, wobei die Regelkennlinie des Regelsystems (12) mehrere Bereiche aufweist;
**dadurch gekennzeichnet, dass** sich die der Regelgröße des Regelsystems (12) entsprechenden Parameter der Fluidfördervorrichtung (100), die durch das Regelsystem (12) auf einen bestimmten Wert gebracht und/oder bei einem bestimmten Wert gehalten werden, in zumindest zwei Bereichen der Regelkennlinie voneinander unterscheiden.

2. Steuereinheit (10) nach Anspruch 1,
**dadurch gekennzeichnet, dass** die der Regelgröße des Regelsystems (12) entsprechenden Parameter der Fluidfördervorrichtung (100), die durch das Regelsystem (12) auf einen bestimmten Wert gebracht und/oder bei einem bestimmten Wert gehalten werden, einen, mehrere oder sämtliche der folgenden Parameter umfassen:
- den durch die Fluidfördervorrichtung (100) geförderten Volumenstrom;
- das Drehmoment eines elektrischen Antriebsmotors (102) der Fluidfördervorrichtung (100);
- die Drehzahl eines elektrischen Antriebsmotors (102) der Fluidfördervorrichtung (100);
- die von einem elektrischen Antriebsmotor (102) der Fluidfördervorrichtung (100) aufgenommene elektrische Leistung;
- den innerhalb eines Fluidförderabschnitts herrschenden Fluiddruck;
- die von einem elektrischen Antriebsmotor (102) der Fluidfördervorrichtung (100) erzeugte Druckdifferenz.

3. Steuereinheit (10) nach Anspruch 1 oder 2,
**dadurch gekennzeichnet, dass** das Regelsystem (12) dazu eingerichtet ist,
- in einem Bereich der Regelkennlinie den durch die Fluidfördervorrichtung (100) geförderten Volumenstrom konstant zu halten;
- in einem Bereich der Regelkennlinie das Drehmoment eines elektrischen Antriebsmotors (102) der Fluidfördervorrichtung (100) konstant zu halten;
- in einem Bereich der Regelkennlinie das Drehmoment eines elektrischen Antriebsmotors (102) der Fluidfördervorrichtung (100) im Wesentlichen kontinuierlich oder proportional zu einem Referenzwert zu erhöhen; und/oder
- in einem Bereich der Regelkennlinie das Drehmoment eines elektrischen Antriebsmotors (102) der Fluidfördervorrichtung (100) im Wesentlichen kontinuierlich oder proportional zu einem Referenzwert zu verringern.

4. Steuereinheit (10) nach einem der vorstehenden Ansprüche,
**dadurch gekennzeichnet, dass** das Regelsystem (12) dazu eingerichtet ist,
- in einem Bereich der Regelkennlinie die Drehzahl eines elektrischen Antriebsmotors (102) der Fluidfördervorrichtung (100) konstant zu halten;
- in einem Bereich der Regelkennlinie die von einem elektrischen Antriebsmotor (102) der Fluidfördervorrichtung (100) aufgenommene elektrische Leistung konstant zu halten;
- in einem Bereich der Regelkennlinie den innerhalb eines Fluidförderabschnitts herrschenden Fluiddruck konstant zu halten; und/oder
- in einem Bereich der Regelkennlinie die von einem elektrischen Antriebsmotor (102) der Fluidfördervorrichtung (100) erzeugte Druckdifferenz konstant zu halten.

5. Steuereinheit (10) nach einem der vorstehenden Ansprüche,
**dadurch gekennzeichnet, dass** das Regelsystem (12) dazu eingerichtet ist, abhängig von einem oder mehreren Umschaltparametern in einen anderen Bereich der Regelkennlinie umzuschalten und das Regelverhalten entsprechend anzupassen.

6. Steuereinheit (10) nach Anspruch 5,
**dadurch gekennzeichnet, dass** der eine oder die mehreren Umschaltparameter einen, mehrere oder sämtliche der folgenden Parameter umfassen:
- den durch die Fluidfördervorrichtung (100) geförderten Volumenstrom;
- das Drehmoment eines elektrischen Antriebsmotors (102) der Fluidfördervorrichtung (100);
- die Drehzahl eines elektrischen Antriebsmotors (102) der Fluidfördervorrichtung (100);
- die von einem elektrischen Antriebsmotor (102) der Fluidfördervorrichtung (100) aufgenommene elektrische Leistung;
- den innerhalb eines Fluidförderabschnitts herrschenden Fluiddruck;
- die von einem elektrischen Antriebsmotor (102) der Fluidfördervorrichtung (100) erzeugte Druckdifferenz.

7. Steuereinheit (10) nach Anspruch 5 oder 6,
**dadurch gekennzeichnet, dass** das Regelsystem (12) dazu eingerichtet ist, in einen anderen Bereich der Regelkennlinie umzuschalten, wenn ein oder mehrere der folgenden Zustände eintreten:
- die von einem elektrischen Antriebsmotor (102) der Fluidfördervorrichtung (100) aufgenommene elektrische Leistung erreicht einen oberen Grenzwert;
- die von einem elektrischen Antriebsmotor (102) der Fluidfördervorrichtung (100) aufgenommene elektrische Leistung erreicht einen unteren Grenzwert;
- die Drehzahl eines elektrischen Antriebsmotors (102) der Fluidfördervorrichtung (100) erreicht einen oberen Grenzwert;
- die Drehzahl eines elektrischen Antriebsmotors (102) der Fluidfördervorrichtung (100) erreicht einen unteren Grenzwert;
- das Drehmoment eines elektrischen Antriebsmotors (102) der Fluidfördervorrichtung (100) erreicht einen unteren Grenzwert;
- das Drehmoment eines elektrischen Antriebsmotors (102) der Fluidfördervorrichtung (100) erreicht einen oberen Grenzwert.

8. Steuereinheit (10) nach einem der vorstehenden Ansprüche,
**dadurch gekennzeichnet, dass** das Regelsystem (12) einen Regler (14) umfasst, welcher mit einer oder mehreren Auswahleinheiten (16a-16e) signalleitend verbunden ist, wobei die eine oder die mehreren Auswahleinheiten (16a-16e) jeweils dazu eingerichtet sind, ein anzuwendendes Regelverhalten des Reglers (14), die Regelgröße und/oder die Stellgröße auszuwählen.

9. Steuereinheit (10) nach einem der vorstehenden Ansprüche,
**gekennzeichnet durch** eine Auswerteeinrichtung (18), welche dazu eingerichtet ist, auf Grundlage von Auswertesignalen Betriebsparameter der Fluidfördervorrichtung (100) abzuleiten.

10. Fluidfördervorrichtung (100), mit
- einer Steuereinheit (10); und
- einem elektrischen Antriebsmotor (102); und
- einer hydraulischen Arbeitsmaschine (103);
**dadurch gekennzeichnet, dass** die Steuereinheit (10) nach einem der vorstehenden Ansprüche ausgebildet ist.

11. Fluidfördervorrichtung (100) nach Anspruch 10,
**dadurch gekennzeichnet, dass** der elektrische Antriebsmotor (102) ein elektronisch kommutierter Motor, ein permanentmagneterregter Synchronmotor oder ein geregelter Kommutatormotor ist.

12. Fluidfördervorrichtung (100) nach Anspruch 10 oder 11,
**dadurch gekennzeichnet, dass** die Fluidfördervorrichtung (100) als Bestandteil eines Haushaltsgeräts ausgebildet ist.

13. Fluidfördervorrichtung (100) nach einem der Ansprüche 10 bis 12,
**dadurch gekennzeichnet, dass** die Fluidfördervorrichtung (100) als Backofenlüfter, Trocknergebläse, Staubsaugergebläse, Tischventilator, Gebäude-Be- und Entlüftungseinheit, Dunstabzugshaubengebläse, Geschirrspülerpumpe oder Waschmaschinenpumpe ausgebildet ist.

14. Verfahren zur Regelung einer Fluidfördervorrichtung (100), mit dem Schritt:
- Regeln der Fluidfördervorrichtung (100) entsprechend einer vorgegebenen Regelkennlinie mittels eines Regelsystems (12), wobei die Regelkennlinie des Regelsystems (12) mehrere Bereiche aufweist;
**dadurch gekennzeichnet, dass** sich die der Regelgröße des Regelsystems (12) entsprechenden Parameter der Fluidfördervorrichtung (100), die durch das Regeln der Fluidfördervorrichtung (100) auf einen bestimmten Wert gebracht und/oder bei einem bestimmten Wert gehalten werden, in zumindest zwei Bereichen der Regelkennlinie voneinander unterscheiden.

15. Verfahren nach Anspruch 14,
**dadurch gekennzeichnet, dass** das Verfahren mit einer Steuereinheit (10) nach einem der Ansprüche 1 bis 9 ausgeführt wird oder einen oder mehrere durch die Steuereinheit (10) nach einem der Ansprüche 1 bis 9 ausführbare Schritte umfasst.
